# EUROPÄISCHE PATENTSCHRIFT

(11) **EP 0 362 552 B1**
(45) Veröffentlichungstag und Bekanntmachung des Hinweises auf die Patenterteilung: **03.02.1993**
(21) Anmeldenummer: 89115977.4
(22) Anmeldetag: 30.08.1989
(51) Int. Cl.: B65B 3/18

(54) **Verfahren zum Befüllen mit einer Flüssigkeit und anschliessenden Verschweissen eines Behälters**
Method for the filling with a liquid and consecutive sealing of a container
Procédé pour le remplissage avec un liquide et le scellage consécutif d'un récipient

(30) Priorität: 07.10.1988 DE 3834184
(43) Veröffentlichungstag der Anmeldung: 11.04.1990
(73) Patentinhaber: Hansen, Bernd, Dipl.-Ing., D-74429 Sulzbach-Laufen (DE)
(72) Erfinder: Hansen, Bernd, Dipl.-Ing., D-74429 Sulzbach-Laufen (DE)
(74) Vertreter: Patentanwälte Bartels und Partner

(56) Entgegenhaltungen:
- DE-U- 8 708 939
- FR-A- 2 347 259
- FR-A- 2 530 582
- US-A- 3 299 603

## Beschreibung

Die Erfindung betrifft ein Verfahren, das die Merkmale des Oberbegriffs des Anspruches 1 aufweist.

Eine zur Durchführung eines derartigen, zum Stande der Technik gehörenden Verfahrens vorgesehene Vorrichtung ist aus der DE-U-87 08 939.4 bekannt. Durch die Anwendung dieses Verfahrens läßt sich erreichen, daß im fertiggestellten Behälter, also dem befüllten und durch den abschließenden Schweißvorgang dicht verschlossenen Behälter, nur eine unbedeutende Restluftmenge enthalten ist, deren Volumen dank des Verfahrensschritts des Anhebens des Füllspiegels praktisch demjenigen des Einfüllstutzens entspricht, wobei es sich wegen der bei dem ersten Schweißvorgang durchgeführten Verkleinerung der Durchlaßöffunung des Einfüllstutzens um ein verhältnismäßig kleines Volumen handelt. Aufgrund der geringen eingeschlossenen Luftmenge sind nach diesem Verfahren befüllte Behälter daher beispielsweise für Infusionszwecke gut geeignet.

Wie sich gezeigt hat, ergeben sich bei der Durchführung des üblichen Verfahrens in manchen Fällen jedoch Probleme dahingehend, daß der abschließende Schweißvorgang nicht zu einem völlig porendichten Verschluß führt.

Der Erfindung liegt die Aufgabe zugrunde, diebezüglich Abhilfe zu schaffen, indem ein Verfahren aufgezeigt wird, durch das stets ein völlig porendichter Verschluß des Behälters sichergestellt wird.

Bei einem Verfahren der eingangs genannten Art ist diese Aufgabe erfindungsgemäß dadurch gelöst, daß während zumindest einem Teilabschnitt des Zeitraumes zwischen dem Beginn des Anhebens des Füllspiegels und des Beginns des zweiten Schweißvorganges an dem Einfüllstutzen des Behälters ein Unterdruck angelegt und von dem eingefüllten Füllgut gebildete, oberhalb des Füllspiegels befindliche Dämpfe, Nebel oder Schäume zumindest teilweise abgesaugt werden.

Durch diesen zusätzlichen Verfahrensschritt wird die Schweißstelle, unabhängig von den Eigenschaften des Füllgutes, vor einer Befeuchtung durch Zutritt von Füllgut geschützt, so daß ein porendichter Verschluß des Behälters gewährleistet ist.

Das erfindungsgemäße Verfahren ist auf einfache Weise durchführbar. Beispielsweise kann so vorgegangen werden, daß bei Verwendung eines Fülldornes, wie er üblicherwiese zum Zuführen des Füllgutes zum Behälter und zum Abführen der Abluft beim Füllvorgang benutzt wird, die Abluftleitung des Fülldornes während eines gewünschten Zeitraums mit einer Saugluftleitung verbunden wird.

In vielen Fällen werden besonders gute Ergebnisse Erzielt, wenn der Unterdruck von Beginn der Deformation des Behälters, also vom Beginn des Anhebens des Füllspiegels an, bis kurz vor Erreichen des höchsten Füllspiegels durchgehend angelegt wird.

Im letzteren Fall wird der erste Schweißvorgang vorzugsweise nach Beendigung des Anlegens des Unterdrucks durchgeführt. In einem solchen Fall hebt der Fülldorn, über dessen Abluftleitung der Unterdruck angelegt worden ist, kurz vor Erreichen des höchsten Füllspiegels von dem Behälter ab. Bei Verwendung einer Vorrichtung der erwähnten, aus der DE-U-87 08 939.4 bekannten Art schließt danach die erste Hälfte der zum Verschweißen vorgesehenen Kopfbacke. Kurz danach, wenn der Füllspiegel durch Kunststoffschrumpfung seine größte Pegelhöhe erreicht hat, schließt die zweite Hälfte der Kopfbacke.

Die Erfindung ist nachstehend anhand eines in der Zeichnung verdeutlichten Ausführungsbeispiels des Verfahrens im einzelnen erläutert.

Es zeigen:
Fig. 1 und 2 abgebrochen und teils schematisch vereinfacht gezeichnete Vertikalschnitte desjenigen Bereichs einer Vorrichtung zum Durchführen des Verfahrens, in dem ein Fülldorn mit einem Behälter-Formwerkzeug zusammenwirkt, wobei die Vorrichtung in einem ersten, bzw. einem zweiten Betriebszustand gezeigt ist, und
Fig. 3 und 4 den Fig. 1 und 2 ähnliche Vertikalschnitte, wobei die Vorrichtung in einem dritten bzw. einem vierten Betriebszustand gezeigt ist.

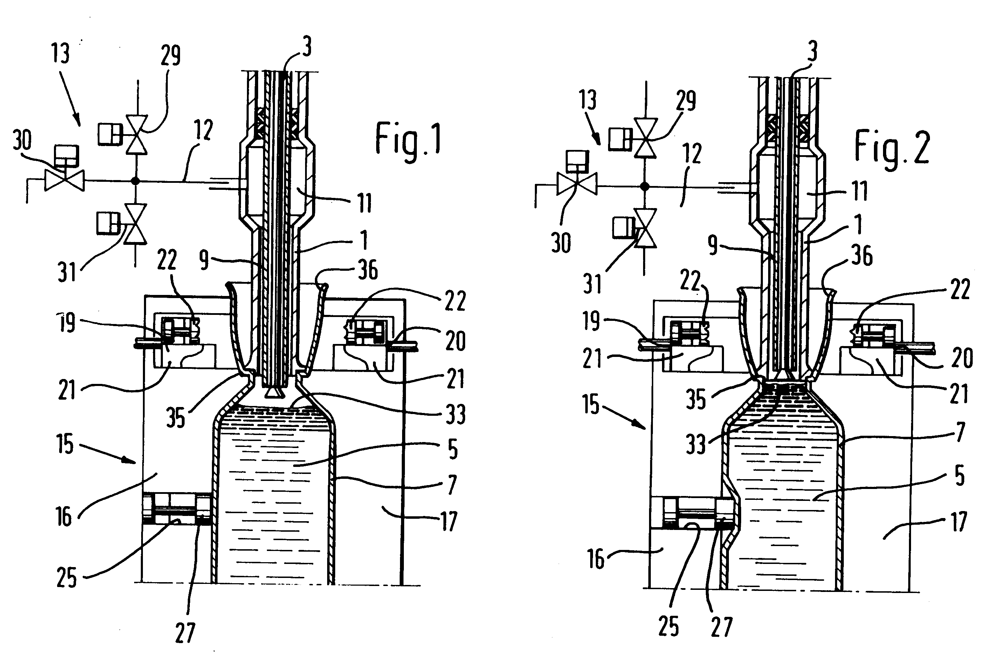

Ein in Vertikalrichtung, d.h. in seiner Längsrichtung, bewegbarer Fülldorn 1, von dem in den Fig. nur der vordere Endabschnitt gezeigt ist, weist eine innere, zentral gelegene Leitung 3 für die Zufuhr flüssigen Füllgutes 5 zu einem Behälter 7 auf. Die innere Leitung 3 des Fülldornes 1 ist von einer Luftleitung 9 umgeben, die im Fülldorn 1 in Form eines zur Leitung 3 konzentrischen Ringkanals ausgebildet ist. Die Luftleitung 9 ist in ihrem erweiterten oberen Endabschnitt 11 über eine flexible Verbindungsleitung 12 mit einer als Ganzes mit 13 bezeichneten Ventilanordnung verbunden, siehe Fig. 1 und 2.

Die Herstellung des Beutels 7 erfolgt im Blasverfahren aus einem Kunststoffschlauch, der in ein Formwerkzeug 15 eingebracht wird, das in der bei derartigen Vorrichtungen üblichen Weise bewegliche Formkörper 16 und 17 sowie im Bereich des oberen Endes derselben verschiebbar gelagerte Kopfbacken 19 und 20 aufweist, welch letztere je einen unteren Backenteil 21 und einen oberen Backenteil 22 aufweisen. Die oberen Backenteile 22 sind für sich gesondert verschiebbar an den unteren Beckenteilen 21 gelagert.

Der Formkörper 16 ist mit einer Aussparung 25 versehen, in die ein Verdrängungsstempel 27 eingesetzt ist, der in der Aussparung 25 zwischen einer in Fig. 1 gezeigten unwirksamen Stellung und einer in Fig. 2 bis 4 gezeigten wirksamen Stellung verschiebbar ist. Die dem Forminnenraum des Formwerkzeugs 15 zugekehrte Arbeitsfläche des Stempels 27 schließt bündig mit der Innenfläche des Formkörpers 16 ab, wenn der Verdrängungsstempel 27 sich in seiner unwirksamen Stellung befindet. Er bildet dann einen Teil der Formanlagefläche für den Behälter 7.

Für die Herstellung eines gefüllten und verschlossenen Behälters 7 werden nach Einbringen des Kunststoffschlauches in des Formwerkzeug 15 die Formkörper 16, 17 in die Schließstellung gebracht. Die Ventilanordnung 13 weist ein Blasluftventil 29 auf, das geöffnet wird, um Blasluft über die Leitung 12 sowie die Luftleitung 9 des aufgesetzten Fülldorns 1 zuzuführen, um den Behälter 7 im Blasverfahren im Formwerkzeug zu formen. Nach Schließen des Blasluftventils 29 wird ein zur Ventilanordnung 13 gehörendes Abluftventil 30 geöffnet und das flüssige Füllgut über die Leitung 3 des Fülldornes 1 zugeführt, bis der Füllspiegel 33 im Behälter 7 die in Fig. 1 eingezeichnete Höhe erreicht hat. Das Abluftventil 30 wird geschlossen, und ein zur Ventilanordnung 13 gehörendes Saugluftventil 31 wird geöffnet. Letzteres ist mit einer Unterdruckquelle verbunden, so daß über die Leitung 12 sowie die innere Luftleitung 9 des Fülldornes 1 in dem oberhalb des Füllspiegels 33 gelegenen Innenraum des Behälters 7 ein Unterdruck erzeugt wird.

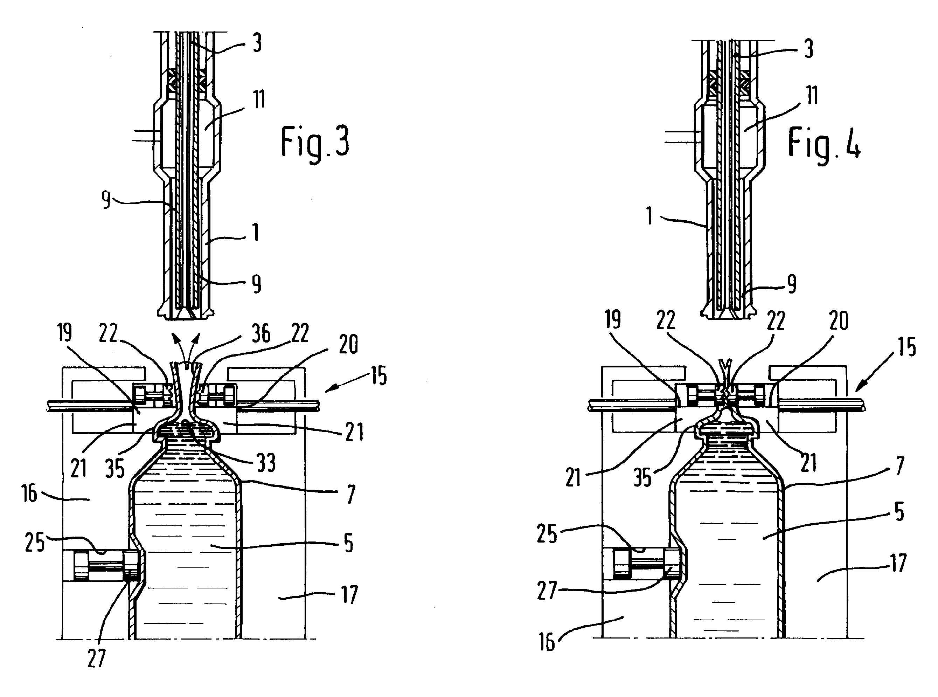

Durch Verschieben des Verdrängungsstempels 27 aus der in Fig. 1 gezeigten unwirksamen Stellung in die in Fig. 2 bis 4 gezeigte wirksame Stellung wird durch Volumenverdrängung der Füllspiegel 33 angehoben, siehe Fig. 2. Kurz bevor der Füllspiegel 33 die größte Höhe erreicht hat, wird der Fülldorn 1 abgehoben und das Saugluftventil 31 geschlossen. Danach schließen die Kopfbacken 19, 20 mit ihren unteren Backenteilen 21, wodurch in einem ersten Schweißvorgang die Größe der Durchlaßöffnung am Einfüllstutzen 35 des Behälters 7 verkleinert wird, wobei der Füllspiegel 33 durch Kunststoffschrumpfung seine Maximalhöhe erreicht, siehe Fig. 3. Kurz danach schließen die oberen Backenteile 22 der Kopfbacken, wodurch in einem zweiten Schweißvorgang die nach dem ersten Schweißvorgang verbleibende Mündungsöffnung 36 des Einfüllstutzens 35 verschweißt wird, siehe Fig. 4.

Bei entsprechender Bewegungssteuerung und Ausbildung des Fülldorns 1 könnte das Verfahren auch so durchgeführt werden, daß der Dorn 1 auf die Mündungsöffnung 36 aufgesetzt bleibt, während der erste Schweißvorgang durch Schließen der unteren Backenteile 21 durchgeführt wird. In einem solchen Falle könnte der Unterdruck im Innenraum des Einfüllstutzens 35 auch noch während der Durchführung des ersten Schweißvorgangs und bis zum Beginn des zweiten Schweißvorgangs aufrechterhalten werden.

## Patentansprüche

1. Verfahren für das Befüllen mit einer Flüssigkeit und das anschließende porendichte Verschweißen eines wenigstens in Teilbereichen elastisch verformbaren Behälters, der einen Einfüllstutzen aufweist, dessen Querschnitt kleiner ist als derjenige des Behälters und der nach dem Befüllen zumindest in seinem Randbereich flachgedrückt und verschweißt wird, wobei nach dem Befüllen der Füllspiegel im Behälter durch eine elastische Deformation des Behälters angeboben wird und wobei in einem ersten Schweißvorgang die Größe der Durchlaßöffnung des Einfüllstutzens verkleinert und danach in einem zweiten Schweißvorgang die nach dem ersten Schweißvorgang verbleibende Mündungsöffnung des Einfüllstutzens verschweißt wird, dadurch gekennzeichnet, daß während zumindest einem Teilabschnitt des Zeitraumes zwischen dem Beginn des Anhebens des Füllspiegels und des Beginns des zweiten Schweißvorganges an dem Einfüllstutzen des Behälters ein Unterdruck angelegt und von dem eingefüllten Füllgut gebildete, oberhalb des Füllspiegels befindliche Dämpfe, Nebel oder Schäume zumindest teilsweise abgesaugt werden.

2. Verfahren nach Anspruch 1, dadurch gekennzeichnet, daß der Unterdruck zumindest während einem Teilabschnitt der Zeitdauer des Anhebens des Füllspiegels angelegt wird.

3. Verfahren nach Anspruch 1 oder 2, dadurch gekennzeichnet, daß der Unterdruck von Beginn der Deformation des Behälters bis kurz vor Erreichen des höchsten Füllspiegels durchgehend angelegt wird.

4. Verfahren nach Anspruch 3, dadurch gekennzeichnet, daß der erste Schweißvorgang nach Beendigung des Anlegens des Unterdrucks durchgeführt wird.

5. Verfahren nach Anspruch 1 oder 2, dadurch gekennzeichnet, daß der erste Schweißvorgang vor Beendigung des Anlegens des Unterdrucks durchgeführt wird.

## Claims

1. Method for the filling with a liquid and the subsequent pore-tight welding of a container which is elastically deformable at least in partial regions, which comprises a filling connection, whereof the cross-section is smaller than that of the container and which after the filling, at least in its edge region, is pressed flat and welded, whereby after filling, the filling level in the container is raised by an elastic deformation of the container and whereby in a first welding operation the size of the opening of the filling connection is reduced and then in a second welding operation the orifice of the filling connection remaining after the first welding operation is welded, characterised in that during at least a portion of the time between the beginning of raising the filling level and the beginning of the second welding operation, a vacuum is applied to the filling connection of the container and vapours, mist or foams located above the filling level and formed by the filling substance introduced are at least partly removed by suction.

2. Method according to Claim 1, characterised in that the vacuum is applied at least during a portion of the duration of the raising of the filling level.

3. Method according to Claim 1 or 2, characterised in that the vacuum is applied continuously from the beginning of the deformation of the container until shortly before reaching the highest filling level.

4. Method according to Claim 3, characterised in that the first welding operation is carried out after ending the application of the vacuum.

5. Method according to Claim 1 or 2, characterised in that the first welding operation is carried out before ending the application of the vacuum.

## Revendications

1. Procédé pour remplir avec un fluide et pour sceller ensuite hermétiquement un récipient dont certaines parties, au moins, sont élastiquement déformables, qui possède un élément de remplissage tubulaire dont la section est inférieure à celle dudit récipient et dont on aplatit et on soude le bord après le remplissage, l'arrangement étant tel qu'après que ledit récipient a été rempli, le niveau de remplissage de ce dernier augmente par suite d'une déformation élastique, tandis qu'une première opération de soudage diminue les dimensions de la section libre de l'élément de remplissage, puis, par une seconde opération de soudage, on soude l'embouchure de l'élément de remplissage subsistant après la première opération de soudage, caractérisé en ce que pendant une partie, au moins, du temps qui s'écoule entre le commencement de l'élévation du niveau de remplissage et le commencement de la seconde,procédure de soudage, une pression négative est exercée sur l'élément de remplissage du récipient, de sorte que les vapeurs, brouillards et mousses produits au-dessus du niveau de remplissage du récipient par le fluide qui y est contenu sont évacués, au moins en partie, par aspiration.

2. Procédé selon la revendication 1, caractérisé en ce que ladite pression négative s'exerce, pendant une partie, au moins, de la période de temps pendant laquelle le niveau de remplissage du récipient s'élève.

3. Procédé selon la revendication 1 ou 2, caractérisé en ce qu'on exerce ladite pression négative en continu à partir de l'instant où le récipient commence à se déformer et on l'applique en continu jusque peu avant d'atteindre le niveau de remplissage maximal du récipient.

4. Procédé selon la revendication 3, caractérisé en ce qu'on effectue la première opération de soudage après la fin de l'application de la pression négative.

5. Procédé selon la revendication 1 ou 2, caractérisé en ce qu'on effectue la première opération de soudage avant de cesser d'appliquer la pression négative.
